# EUROPÄISCHE PATENTANMELDUNG

(11) **EP 0 668 200 A2**
(43) Veröffentlichungstag der Anmeldung: **23.08.1995**
(21) Anmeldenummer: 95101622.9
(22) Anmeldetag: 07.02.1995
(51) Int. Cl.: B60T 13/52, B60T 13/57, B60T 13/72

(54) **Pneumatischer Kraftverstärker mit elektromagnetischer Hilfssteuerung, insbesondere für Kraftfahrzeug-Bremsanlagen**

(30) Priorität: 17.02.1994 DE 4405092
(71) Anmelder: LUCAS INDUSTRIES PUBLIC LIMITED COMPANY, Solihull, West Midlands B91 3TX (GB)
(72) Erfinder: Schlüter, Peter, D-56206 Kammerforst (DE)
(74) Vertreter: Schmidt, Steffen J., Dipl.-Ing.

(57) **Zusammenfassung**

© In einem Verstärkergehäuse (10) sind zwei durch eine bewegliche Wand (16) voneinander getrennte Kammern (12, 14) durch ein Steuerventil (20) miteinander verbindbar, das ein gemeinsam mit der Wand (16) axial bewegbares Ventilgehäuse (22) mit einem ersten Ventilsitz (24) sowie einen im Ventilgehäuse axial beweglichen, zum ersten Ventilsitz hin vorgespannten Dichtkörper (60) und einen Ventilkörper (30) aufweist. Der Ventilkörper (30) weist einen zweiten Ventilsitz (32) auf und ist in Richtung zum Dichtkörper (60) hin vorgespannt, von einem mittels eines Betätigungsgliedes (44) bewegbaren Kolben (42) in Richtung vom Dichtkörper (60) weg mitnehmbar und mittels eines Elektromagneten (40) auch unabhängig vom Kolben (42) bewegbar. Zwischen Ventilkörper (30) und Kolben (56) ist eine axial wirkende Dichtung (56) so angeordnet, daß sie nur dann abdichtet, wenn ein am Ventilkörper (30) ausgebildetes Widerlager (55) mindestens annähernd an einem am Kolben (42) ausgebildeten Mitnehmer anliegt.

## Beschreibung

Die Erfindung betrifft einen pneumatischen Kraftverstärker mit elektromagnetischer Hilfssteuerung, insbesondere für Kraftfahrzeug-Bremsanlagen, nach dem Oberbegriff des Anspruchs 1.

Bei einem bekannten Bremskraftverstärker dieser Gattung (DE 42 11 849 A1) ist das Anschlagglied am Kolben befestigt und erstreckt sich durch miteinander fluchtende radiale Aussparungen des Ventilkörpers und des Ventilgehäuses nach außen, wo es mit einem am Verstärkergehäuse ausgebildeten Anschlag zusammenwirkt. Die Aussparung des Ventilkörpers ist so bemessen, daß dessen Ruhestellung durch unmittelbare Anlage des Ventilkörpers am Anschlagglied bestimmt ist. Die zwischen Ventilkörper und Kolben angeordnete Dichtung ist eine Lippendichtung, die in einer Ringnut des Kolbens gehalten ist und unabhängig von der Stellung des Ventilkörpers in bezug auf den Kolben dichtend an einer zylindrischen Innenwand des Ventilkörpers anliegt. Dadurch entsteht Reibung mit der nachteiligen Wirkung, daß eine elektromagnetische Betätigung des Ventilkörpers wie auch dessen anschließende Rückkehr in seine Ruhestellung behindert wird. Eine zuverlässige Rückkehr des Ventilkörpers in seine Ruhestellung nach rein elektromagnetischer Betätigung, also bei in seiner Ruhestellung stehengebliebenem Kolben, erfordert eine kräftige Bemessung der Rückstellfeder, die ihrerseits zusammen mit den genannten Reibungskräften die elektromagnetische Betätigung des Ventilkörpers erschwert. Deshalb muß auch der Elektromagnet kräftig bemessen sein, was dessen ohnehin schon erheblichen Platzbedarf im beengten Bauraum innerhalb des Kraftverstärkers noch vergrößert und wegen des erhöhten Strombedarfs des Elektromagneten auch Erwärmungsprobleme zur Folge hat.

Bei einem anderen bekannten, gattungsähnlichen Bremskraftverstärker (EP 0 478 396 A1) ist am Kolben ein Mitnehmer ausgebildet, der in Ruhestellung des Kolbens einen axialen Abstand von einem ihm zugeordneten, am Ventilkörper ausgebildeten Widerlager hat. Bei mechanischer Betätigung des Bremskraftverstärkers muß der Kolben deshalb um eine bestimmte Strecke nach vorne verschoben werden, ehe sein Mitnehmer gegen das Widerlager des Ventilkörpers stößt und diesen zuverlässig mitnimmt. Es ist allerdings auch möglich, daß der Ventilkörper von Anfang an durch Reibung mitgenommen wird, die vom Kolben über die Dichtung auf den Ventilkörper übertragen wird. Dies ist zwar unschädlich, doch hat die Reibung auch hier die beschriebene nachteilige Wirkung.

Der Erfindung liegt deshalb die Aufgabe zugrunde, bei einem pneumatischen Kraftverstärker mit elektromagnetischer Hilfssteuerung die erforderlichen elektromagnetischen Kräfte möglichst gering zu halten.

Die Aufgabe ist erfindungsgemäß mit den Merkmalen des Anspruchs 1 gelöst.

Die Erfindung beruht auf der Erkenntnis, daß eine Abdichtung zwischen Kolben und Ventilkörper nur erforderlich ist, solange beide ihre Ruhestellung einnehmen. Deshalb genügt es, zwischen Kolben und Ventilkörper eine nur axial wirkende Dichtung anzuordnen; es kann hingenommen werden, daß diese Dichtung ihre Wirkung sofort verliert, wenn der Ventilkörper sich infolge elektromagnetischer Betätigung aus seiner Ruhestellung entfernt, während der Kolben in seiner Ruhestellung bleibt.

Die im Anspruch 2 beschriebene ausschließliche Abhängigkeit der Ruhestellung des Ventilkörpers von derjenigen des Kolbens hat den Vorteil, daß die Dichtwirkung der zwischen Kolben und Ventilkörper angeordneten Dichtung nicht von Herstellungs- und Montagetoleranzen anderer Bauteile, insbesondere des Anschlaggliedes abhängt.

In den Ansprüchen 3 und 4 sind zwei alternative Ausgestaltungen der Erfindung beschrieben.

Ausführungsbeispiele der Erfindung werden im folgenden anhand schematischer Zeichnungen mit weiteren Einzelheiten erläutert. Es zeigen:
Fig. 1 einen Axialschnitt durch einen pneumatischen Bremskraftverstärker mit elektromagnetischer Hilfssteuerung,
Fig. 2 einen vergrößerten Ausschnitt aus Fig. 1,
Fig. 3 einen noch weiter vergrößerten Ausschnitt aus Fig. 2 und
Fig. 4 einen der Fig. 3 entsprechenden Ausschnitt einer abgewandelten Ausführungsform der Erfindung.

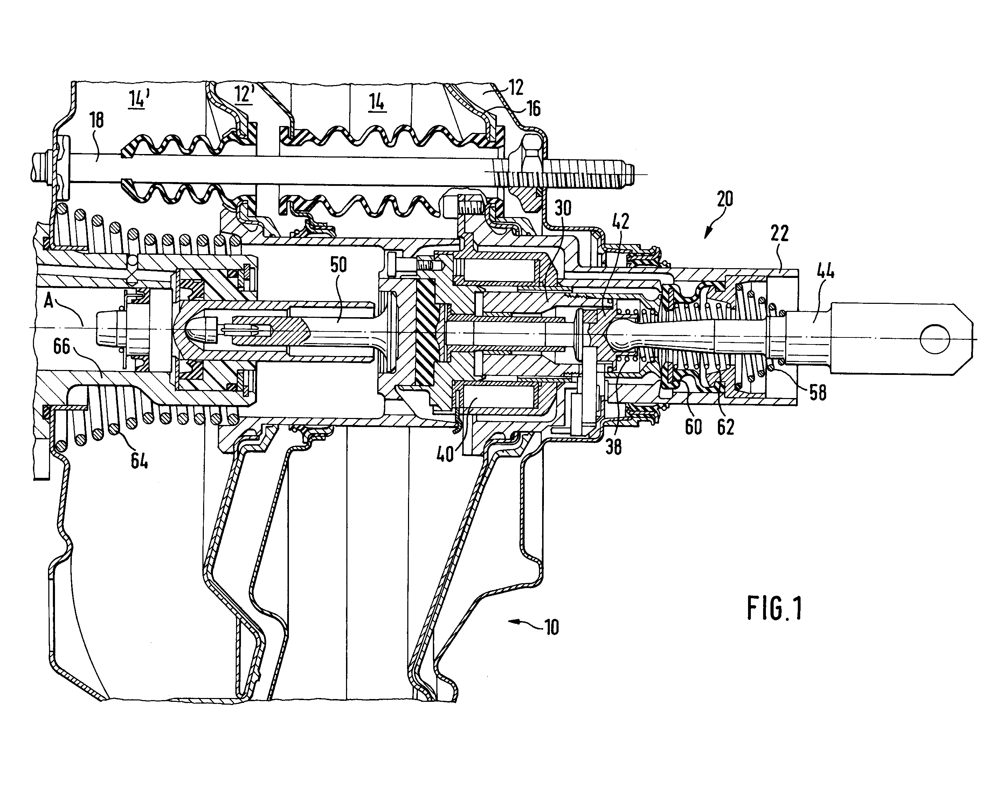

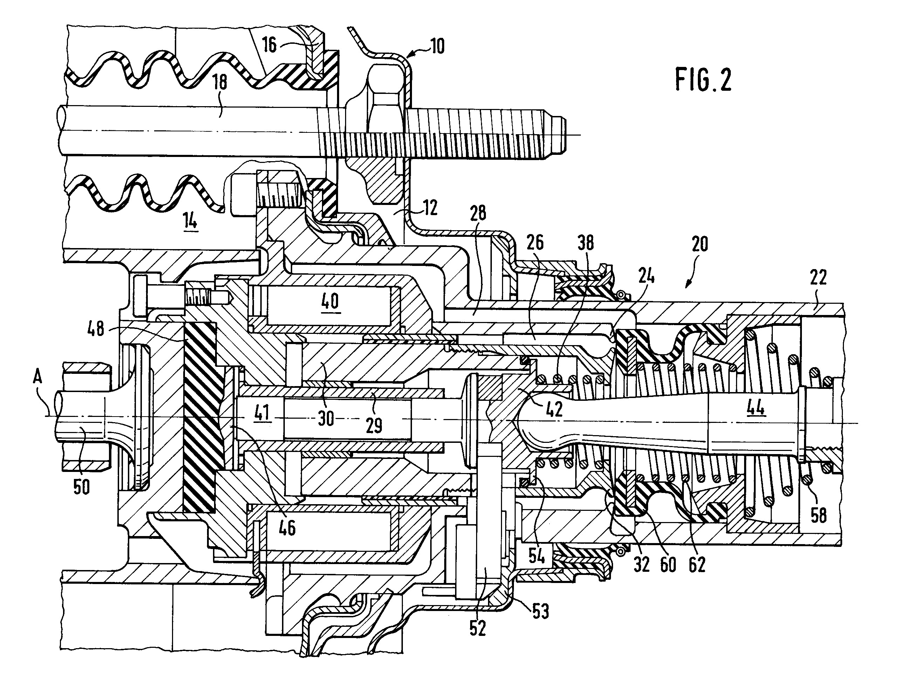

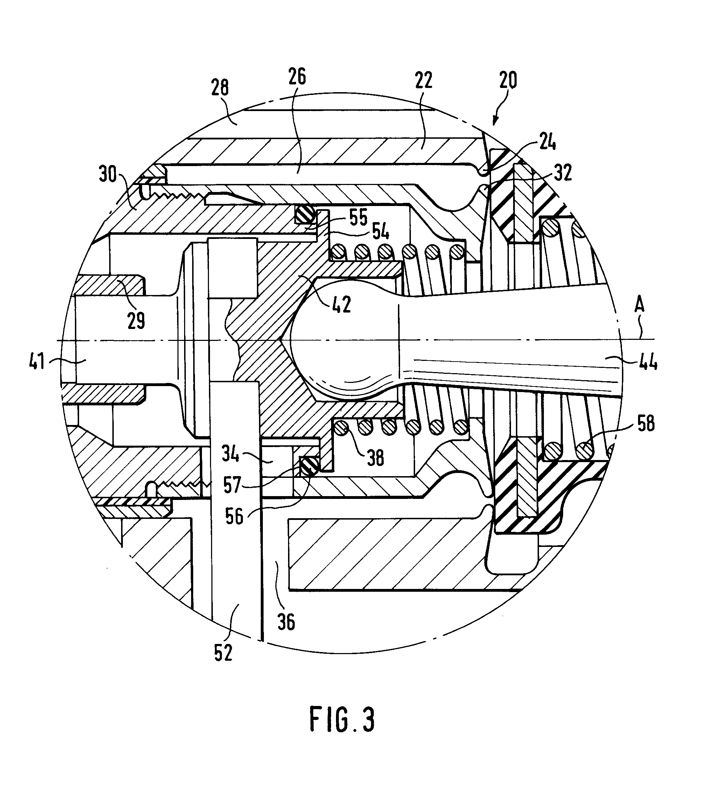

Der in Fig. 1 bis 3 dargestellte Bremskraftverstärker ist im wesentlichen rotationssymmetrisch in bezug auf eine Achse A, die bei Einbau in ein Kraftfahrzeug normalerweise mit der Fahrzeuglängsrichtung übereinstimmt. Gemäß Fig. 1 handelt es sich um einen Bremskraftverstärker in Tandembauweise mit einem Verstärkergehäuse 10, einer ersten Kammer 12 und einer zweiten Kammer 14, die durch eine bewegliche Wand 16 voneinander getrennt sind, sowie mit einer ersten Zusatzkammer 12' und einer zweiten Zusatzkammer 14', die durch eine bewegliche Wand 16' voneinander getrennt sind. Das Verstärkergehäuse 10 ist durch achsparallele Zuganker 18 zusammengehalten, von denen nur einer dargestellt ist. Auf Besonderheiten, die sich aus der Tandembauweise ergeben, braucht, da diese bekannt sind, nicht eingegangen zu werden; es genügt zu erwähnen, daß die erste Kammer 12 ständig mit der ersten Zusatzkammer 12', und die zweite Kammer 14 ständig mit der zweiten Zusatzkammer 14' verbunden ist.

Zum Bremskraftverstärker gehört ein Steuerventil 20, das zum größten Teil in das Verstärkergehäuse 10 eingebaut ist und ein in bezug auf dieses axial bewegliches Ventilgehäuse 22 aufweist. Im Inneren des Ventilgehäuses 22 ist ein ringförmiger erster Ventilsitz 24 ausgebildet, der einen in die hintere Kammer 12 mündenden Kanal 26 von einem in die vordere Kammer 14 mündenden Kanal 28 trennt. Das Ventilgehäuse 22 weist ferner eine axiale Bohrung auf, in der eine am Ventilgehäuse 22 befestigte zentrale Hülse 29 angeordnet ist. In der axialen Bohrung sowie auf der Hülse 29 ist ein hülsenförmiger Ventilkörper 30 längs der Achse A verschiebbar geführt. Der Ventilkörper 30 ist aus einem vorderen und einem hinteren Bauteil zusammengesetzt, die gemäß Fig. 1 miteinander verschraubt sind. Am hinteren Ende des hinteren, in der Zeichnung rechten, Bauteils des Ventilkörpers 30 ist ein zum ersten Ventilsitz 24 konzentrischer zweiter Ventilsitz 32 ausgebildet.

In einem Abstand vor dem zweiten Ventilsitz 32, in der Zeichnung also links davon, weist der Ventilkörper 30 eine radiale Aussparung 34 auf, an die sich eine ebenfalls radiale, in axialer Richtung jedoch breitere Aussparung 36 im Ventilgehäuse 22 anschließt. Der Ventilkörper 30 wird von einer axial vorgespannten Ventilfeder 38 ständig nach hinten, in Fig. 1 bis 3 also nach rechts, gedrängt. In das Steuerventil 20 ist ein Elektromagnet 40 eingebaut, dem das linke Bauteil des Ventilkörpers 30 als Magnetanker derart zugeordnet ist, daß der Ventilkörper 30 gegen den Widerstand der Ventilfeder 38 nach vorne gezogen wird, wenn der Elektromagnet 40 bestromt wird.

In der zentralen Hülse 29 ist eine Kolbenstange 41 eines Kolbens 42 geführt, der an seinem hinteren Ende mit einem stangenförmigen Betätigungsglied 44 verbunden ist und an seinem vorderen Ende einen Kolbenkopf 46 aufweist. Dieser bildet zusammen mit einem in das Ventilgehäuse 22 eingebetteten Gummikörper 48 und einem davor angeordneten Kraftabgabeglied 50 eine mechanische Kraftübersetzung von bei Bremskraftverstärkern üblicher Art.

In eine Ringnut des Kolbens 42 ist ein Anschlagglied 52 derart eingerastet, daß es zu gemeinsamer Axialbewegung mit dem Kolben verbunden ist. Das Anschlagglied 52 erstreckt sich radial durch die Aussparungen 34 und 36 im Ventilkörper 30 bzw. Ventilgehäuse 22 nach außen und liegt in der abgebildeten Ruhestellung des Kolbens 42 an einem Anschlag 53 an, der an einer Schulter des Verstärkergehäuses 10 ausgebildet und somit von der Stelllung des Ventilgehäuses 22 unabhängig ist.

In einem Abstand hinter dem Anschlagglied 52 ist am Kolben 42 ein flanschartiger Mitnehmer 54 ausgebildet, der in der abgebildeten Ruhestellung des Kolbens 42 und des Ventilkörpers 30 an einem am Ventilkörper ausgebildeten ringförmigen Widerlager 55 anliegt. Die Ventilfeder 38, die diese Anlage bewirkt, ist vollständig innerhalb des Ventilkörpers 30 angeordnet und zwischen dem zweiten Ventilsitz 32 und dem Kolben 42 eingespannt.

Radial außerhalb des Widerlagers 55 ist eine ringförmige Dichtung 56 angeordnet, die in einer im Ventilkörper 30 ausgebildeten, stirnseitig nach hinten offenen ringförmigen Ausnehmung 57 liegt und in der abgebildeten Ruhestellung gegen den Mitnehmer 54 des Kolbens 42 abdichtet. Der wirksame Durchmesser der Dichtung 56 ist gemäß Fig. 1 bis 3 etwas kleiner als der wirksame Durchmesser des zweiten Ventilsitzes 32. Hinter der Dichtung 56, in den Zeichnungen also rechts davon, herrscht ständig Atmosphärendruck. Die Dichtung 56 verhindert in der abgebildeten Ruhestellung des Ventilkörpers 30, daß Umgebungsluft durch den Ventilkörper 30 hindurch und weiter durch die Aussparungen 34 und 36 in die hintere Kammer 12 gelangt.

Das Betätigungsglied 44 ist durch eine hintere Rückstellfeder 58 normalerweise in seiner abgebildeten Ruhestellung gehalten, in der ein innerhalb des Ventilgehäuses 22 in üblicher Weise angeordneter und durch eine Feder 62 nach vorne vorgespannter ringförmiger Dichtkörper 60 am ersten Ventilsitz 24 abdichtend anliegt, gegen den zweiten Ventilsitz 32 jedoch nicht vollständig abdichtet, wobei zwischen den beiden Kammern 12 und 14 ein leichtes Druckgefälle besteht. Im Betrieb ist die vordere Kammer 14 ständig an eine Vakuumquelle angeschlossen; infolgedessen herrscht in der Ruhestellung des Ventilkörpers 30 in beiden Kammern 12 und 14 Unterdruck. Die bewegliche Wand 16 und das mit ihr zu gemeinsamer Axialbewegung verbundene Ventilgehäuse 22 werden von einer vorderen Rückstellfeder 64 in ihre abgebildete hinteren Endstellung gedrängt.

Im unbetätigtem Zustand liegt das Anschlagglied 52 am Anschlag 53 an, wodurch die Ruhestellung des Kolbens 42 festgelegt ist. Der Ventilkörper 30 stützt sich mit nahezu der gesamten Kraft der zwischen ihm und dem Kolben 42 eingespannten Ventilfeder 38 am Mitnehmer 54 ab, wodurch auch die Ruhestellung des Ventilkörpers 30 festgelegt ist. Dabei liegt der zweite Ventilsitz 32 mit einer geringen Restkraft der Ventilfeder 38 am Dichtkörper 60 an.

Wenn das Betätigungsglied 44, das beispielsweise mit dem Bremspedal eines Kraftfahrzeugs verbunden ist, nach vorne verschoben wird und dadurch den Kolben 42 nach vorne schiebt, nimmt dessen Mitnehmer 54 das Widerlager 55 und somit den gesamten Ventilkörper 30 mit, sodaß dessen Ventilsitz 32 sich vom Dichtkörper 60 löst und von hinten in das Ventilgehäuse 22 einströmende Umgebungsluft durch den Kanal 26 und weiter durch die radiale Aussparung 36 im Ventilgehäuse 22 in die hintere Kammer 12 gelangen läßt. Die vordere Kammer 14 wird von der hinteren Kammer 12 getrennt, da sich der Dichtkörper 60 fest an den ersten Ventilsitz 24 anlegt. Somit entsteht zwischen den beiden Kammern 12 und 14 ein Druckgefälle, das die bewegliche Wand 16 samt dem Ventilgehäuse 22 und dem Kraftabgabeglied 50 sich nach vorne bewegen läßt. Das Kraftabgabeglied 50 überträgt die auf ihn einwirkende Kraft auf einen Hauptbremszylinder 66, dessen hinterer Endbereich in Fig. 1 dargestellt ist.

Falls die mechanisch über den Kolben 42 bewirkte Vorwärtsbewegung des Ventilkörpers 30 und die dabei stattfindende Kraftabgabe an den Hauptbremszylinder 66 beschleunigt und verstärkt werden soll, wird der Elektromagnet 40 erregt, sodaß er den Ventilkörper 30 vom Mitnehmer 54 weg nach vorne zieht und dadurch den freien Strömungsquerschnitt zwischen dem zweiten Ventilsitz 32 und dem Dichtkörper 60 vergrößert. Eine derart verstärkte Kraftausübung des Bremskraftverstärkers kann beispielsweise wünschenswert sein, wenn ein abzubremsendes Fahrzeug stark beladen ist oder wenn eine besonders schnelle Vorwärtsbewegung des Betätigungsgliedes 44 darauf schließen läßt, daß eine Notbremsung erwünscht ist.

In solchen Fällen wird dem Elektromagneten 40 Strom über ein Steuergerät zugeführt, zu dem ein das Betätigungsglied 44 überwachender Beschleunigungssensor gehört. Stattdessen oder zusätzlich kann die Stromversorgung des Elektromagneten 40 von einem Abstandssensor gesteuert werden, der ohne Mitwirkung des Fahrers eines Kraftfahrzeugs eine Bremsung auslöst, wenn der Abstand zu einem voranfahrenden Fahrzeug einen bestimmten Mindestbetrag unterscheidet. Im letztgenannten Fall bewirkt die Steuerung über den Elektromagneten 40, daß der Ventilkörper 30 nach vorne bewegt und dadurch Umgebungsluft in die erste Kammer 12 eingelassen wird, selbst wenn eine mechanische Betätigung nicht stattfindet, der Kolben 42 also in seiner Ruhestellung bleibt.

In jedem Fall wird nach dem Abschalten des Elektromagneten 40 der Ventilkörper 30 von der Ventilfeder 38 wieder nach hinten gedrängt, sodaß das Widerlager 55 sich wieder an den Mitnehmer 54 anlegt und die Dichtung 56 erneut wirksam wird. Nach dem Ende einer mechanischen Krafteinleitung über das Betätigungsglied 44 kehrt der Kolben 42 zusammen mit dem Ventilkörper 30 in die Ruhestellung zurück. Die bewegliche Wand 16 und das Ventilgehäuse 22 nehmen an dieser Rückkehrbewegung solange nicht teil, wie noch ein Druckgefälle zwischen den Kammern 12 und 14 besteht. Das Druckgefälle wird dadurch abgebaut, daß der Ventilkörper 30 den Dichtkörper 60 um eine kleine Strecke nach hinten drängt, sodaß dieser sich vom ersten Ventilsitz 24 löst.

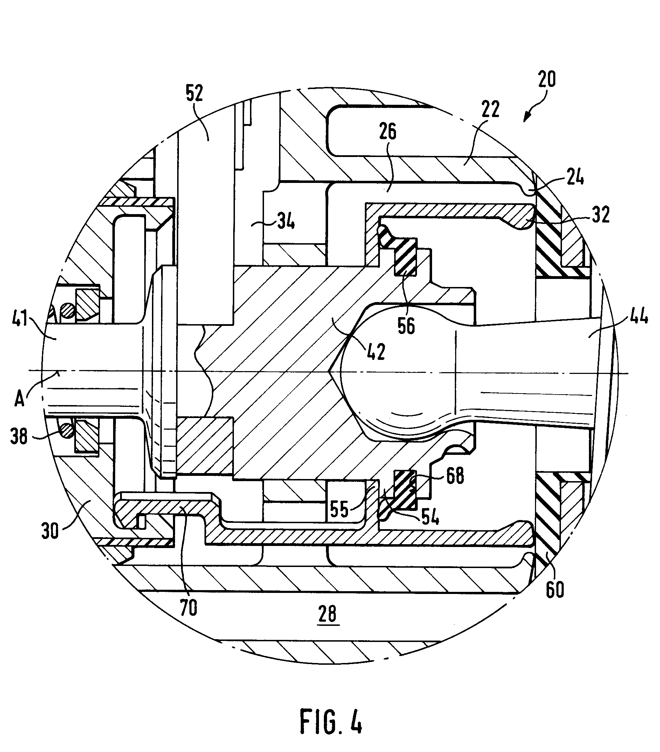

Die Ausführungsform gemäß Fig. 4 unterscheidet sich von der in Fig. 1 bis 3 dargestellten vor allem dadurch, daß die Dichtung 56 eine Lippendichtung ist, die in einer radial nach außen offenen ringförmigen Aussparung 68 des Kolbens 42 sitzt, den Mitnehmer 54 axial nach vorne ragend übergreift und gegen das Widerlager 55 des Ventilkörpers 30 abdichtet. Das hintere Bauteil des Ventilkörpers 30, das den zweiten Ventilsitz 32 aufweist, ist mit dem vorderen Bauteil des Ventilkörpers gemäß Fig. 4 nicht verschraubt, sondern durch federnde Rastfinger 70 verbunden.

## Patentansprüche

1. Pneumatischer Kraftverstärker mit elektromagnetischer Hilfssteuerung, insbesondere für Kraftfahrzeug-Bremsanlagen, mit
- einem Verstärkergehäuse (10), in dem
-- mindestens eine erste Kammer (12) und eine zweite Kammer (14) enthalten und
-- durch eine bewegliche Wand (16) voneinander getrennt sind,
- einem Ventilgehäuse (22), das
-- mit der beweglichen Wand (16) zu gemeinsamer axialer Relativbewegung in bezug auf das Verstärkergehäuse (10) verbunden ist und
-- einen ersten Ventilsitz (24) aufweist,
- einem Dichtkörper (60), der
-- im Ventilgehäuse (22) axial beweglich angeordnet und
-- in Richtung zum ersten Ventilsitz (24) hin vorgespannt ist,
- einem Kolben (42), der
-- mittels eines Betätigungsgliedes (44) axial vom Dichtkörper (60) weg bewegbar ist,
- einem Ventilkörper (30), der
-- einen dem Dichtkörper (60) zugeordneten zweiten Ventilsitz (32) aufweist,
-- in Richtung zum Dichtkörper (60) hin vorgespannt ist,
-- vom Kolben (42) in Richtung vom Dichtkörper (60) weg mitnehmbar ist und
-- mittels eines Elektromagneten (40) auch unabhängig vom Kolben (42) in Richtung vom Dichtkörper (60) weg bewegbar ist,
- einer Dichtung (56) zwischen Ventilkörper (30) und Kolben (42),
- einem Anschlagglied (52), das eine gemeinsame Ruhestellung des Kolbens (42) und des Ventilkörpers (30) definiert, in der die erste Kammmer (12) gegen Einströmen von Luft abgedichtet und mit der zweiten Kammer (14) verbunden ist, und
- einem Kanal (26), durch den Luft in die erste Kammer (12) einströmt, wenn der Ventilkörper (30) seine Ruhestellung verläßt, wobei sich der Dichtkörper (60) an den ersten Ventilsitz (24) anlegt und die Verbindung zwischen den beiden Kammern (12, 14) unterbricht,
dadurch gekennzeichnet, daß
die Dichtung (56) zwischen Ventilkörper (30) und Kolben (42) axial wirkend und so angeordnet ist, daß sie nur dann abdichtet, wenn ein am Ventilkörper(30) ausgebildetes Widerlager (55) mindestens annähernd an einem am Kolben (42) ausgebildeten Mitnehmer (54) anliegt.

2. Kraftverstärker nach Anspruch 1,
dadurch gekennzeichnet, daß
das Widerlager (55) am Ventilkörper (30) so angeordnet ist, daß es in der Ruhestellung des Kolbens (42) an dessen Mitnehmer (54) anliegt und dadurch die Ruhestellung des Ventilkörpers (30) abhängig von derjenigen des Kolbens (42) bestimmt.

3. Kraftverstärker nach Anspruch 1 oder 2, dadurch gekennzeichnet, daß die Dichtung (56) eine Rundschnurdichtung ist, die in einer stirnseitig offenen ringförmigen Ausnehmung (57) des Ventilkörpers (30) liegt und gegen den Mitnehmer (54) abdichtet.

4. Kraftverstärker nach Anspruch 1 oder 2,
dadurch gekennzeichnet, daß die Dichtung (56) eine Lippendichtung ist, die in einer radial nach außen offenen ringförmigen Ausnehmung (68) des Kolbens (42) liegt, dessen Mitnehmer (54) in axialer Richtung übergreift und gegen das Widerlager (55) abdichtet.
